(19) Europäisches Patentamt
European Patent Office
Office européen des brevets

(11) Veröffentlichungsnummer: **0 557 692 A1**

(12) **EUROPÄISCHE PATENTANMELDUNG**

(21) Anmeldenummer: **93100244.8**

(22) Anmeldetag: **09.01.93**

(51) Int. Cl.5: **B62D 7/15**, B62D 6/00, //(B62D101/00,111:00)

(30) Priorität: **31.01.92 DE 4202699**

(43) Veröffentlichungstag der Anmeldung: **01.09.93 Patentblatt 93/35**

(84) Benannte Vertragsstaaten: **DE FR GB SE**

(71) Anmelder: **ROBERT BOSCH GMBH**
**Postfach 30 02 20**
**D-70442 Stuttgart(DE)**

(72) Erfinder: **Cao, Chi-Thuan, Dr.-Ing.**
**Tubizer Strasse 35**
**W-7015 Korntal(DE)**
Erfinder: **Schubert, Michael, Dipl.-Ing.**
**Drosselweg 25**
**W-7262 Althengstett(DE)**

(54) **Vorrichtung zur Steuerung des Lenkwinkels.**

(57) Es wird eine Vorrichtung zur Steuerung des Lenkwinkels $\delta$ wenigstens einer Achse eines Fahrzeugs beschrieben. Hierbei wird der Lenkradeinschlag $\delta_v$ der Vorderachse, die Querbeschleunigung $a_y$, die Längs- und Quergeschwindigkeit $v_x$ und $v_y$ und die Giergeschwindigkeit $\Psi$ ermittelt.

In einem Verstärker mit $PT_1$-Verhalten wird in Abhängigkeit vom Lenkwinkeleinschlag $\delta_v$ eine Bezugsgröße $y_r$ gebildet. Andererseits wird mittels einer Linearkombination aus Querbeschleunigung $a_y$ und Giergeschwindigkeit $\Psi$ eine Regelgröße y gewonnen.

Ein Anteil des Integrals der Differenz ($y_r$ - y), sowie quergeschwindigkeits-, giergeschwindigkeits, - bezugsgrößen - und lenkwinkeleinschlagabhängige Anteile ergeben in der Summe ein Lenkwinkelsignal $\Delta\delta_v$ und/oder $\delta_h$ mit dem in die Lenkung wenigstens einer Achse eingegriffen wird.

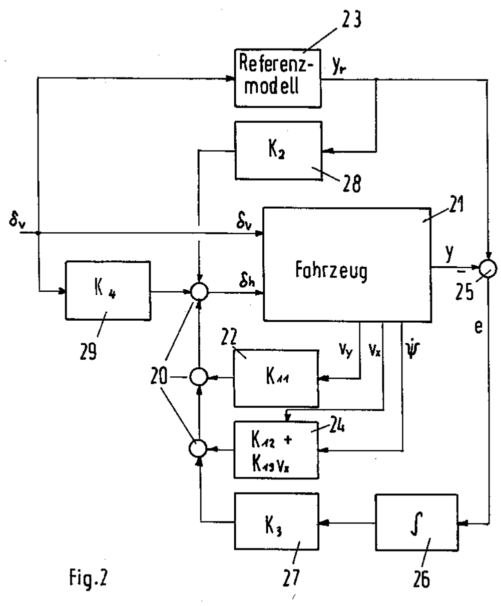

Fig.2

EP 0 557 692 A1

Eine Vorrichtung gemäß dem Oberbegriff des Anspruchs 1 ist aus der DE-A1 3734477 bekannt. Es handelt sich dort um eine Zustandsregelung, deren Reglerparameter durch einen Riccati-Entwurf optimiert wurden.

Bei der Regelung gemäß dem Stande der Technik kann die für eine bestimmte Geschwindigkeit optimierte Regelung nur in einem engen Bereich um diesen Arbeitspunkt eingesetzt werden, da eine starke Abhängigkeit der Fahrzeugdynamik von der Fahrzeuggeschwindigkeit besteht. Da die Riccati-Optimierung aus Gründen der Rechenzeit nicht im on-line-Betrieb realisierbar ist, müssen die Reglerparameter vorab in einem Geschwindigkeitsraster (z. B. 5 km/h) berechnet in Speichern abgelegt und on-line umgeschaltet werden.

Vorteile der Erfindung

Es ist deshalb Ziel dieser Erfindung, einen verbesserten Regler zu schaffen, der folgende Eigenschaften besitzt:

- Einfache Realisierung durch feste Reglerparameter im gesamten Betriebsbereich
- Besseres Regelverhalten ohne Umschaltung der Reglerparameter
- Entwurfsanforderungen an die Regelung sollen durch eine off-line-Optimierung berücksichtigt werden.

Wie oben bereits ausgeführt befaßt sich die vorliegende Erfindung mit einer Vorrichtung zur Verbesserung der Querdynamik eines Straßenfahrzeugs durch aktive Lenkung.

Es ergeben sich prinzipiell drei Möglichkeiten des Lenkeingriffs:

- Reine Hinterachslenkung
- Reine Vorderachslenkung
- Kombination aus Vorder- und Hinterachslenkung,

wobei der Eingriff aufgrund gemessener oder geschätzter Fahrzeug-Zustandsgrößen erfolgt. Das Ziel des Eingriffs besteht darin, dem Fahrzeug ein gewünschtes Fahrverhalten aufzuprägen und somit sie dynamischen Eigenschaften zu verbessern. Ein Referenzmodell dient dazu, das gewünschte Fahrverhalten vorzugeben. Fig. 1 veranschaulicht den prinzipiellen Aufbau des geregelten Systems einer aktiven Lenkung.

Dort ist ein Fahrzeug selbst mit 1, ein Fahrer mit 2 bezeichnet. Der vom Fahrer vorgegebene Vorderachslenkwinkel $\delta_v$ wird dem Fahrzeug 1 und einem Referenzmodell 3 zugeführt, welches eine Führungsgröße $y_r$ erzeugt. Im Differenzbildner 4 wird die Differenz 2 (Regelabweichung) $e = y_r - y$ gebildet, wobei die Regelgröße y aus Fahrzeuggrößen ermittelt wird. Ein Regler 5 erzeugt ein Signal $\delta_h$, das den Hinterachslenkwinkel bestimmt und/oder ein Signal, das dem Vorderachslenkwinkelsignal $\delta_v$ überlagert wird.

Fig. 2 gibt das Blockschaltbild einer beispielweisen erfindungsgemäßen Modellfolgeregelung für eine Hinterachslenkung wieder. Als Regelgröße

$$y = D\, a_y + (1-D)\, v_x\, \dot{\Psi} \quad (0 \leqq D \leqq 1)$$

wird eine Linearkombination aus Querbeschleunigung $a_y$ und Giergeschwindigkeit $\Psi$ sowie der Fahrzeuggeschwindigkeit $v_x$ des Fahrzeugs verwendet. Die benötigten Größen ay, $\Psi$ und vx werden in dem das Fahrzeug darstellenden Block 21 gemessen bzw. aus andern Meßgrößen bestimmt. Auch die Fahrzeugquergeschwindigkeit $v_y$ wird im Block 21 bestimmt. Durch den Faktor D kann die Gewichtung der beiden Regelgrößenanteile variiert werden.

Das Referenzmodell 23, ein $PT_1$-Glied, dessen Parameter Zeitkonstante und Verstärkung das gewünschte Fahrzeugverhalten festlegen, liefert in Abhängigkeit vom Vorderachslenkwinkel $\delta_v$ die Führungsgröße $y_r$. Die Regelabweichung e ergibt sich als Differenz zwischen Führungsgröße $y_r$ und Regelgröße y.

Das Regelgesetz

$$\delta_h(k) = K_{11}\, v_y(k) + (k_{12} + k_{13}\, v_x)\, \dot{\Psi}(k) + k_2\, y_r(k) + k_3\, T \sum_{i=1}^{k} e(i) + k_4\, \delta_v(k)$$

besteht aus folgenden Anteilen, die im Addierer 20 aufaddiert werden:

- Rückführung der Quergeschwindigkeit $v_y$ (Block 22; $k_{11}\, v_y$)
- Geschwindigkeitsabhängige Rückführung der Giergeschwindigkeit $\dot{\Psi}$ (Block 24; $(k_{12} + k_{13}\, v_x)\, \Psi$)

- Integralrückführung der Regelabweichung e (gebildet in Blöcke 26 und 27;

$$k_3 \; T \sum_{i=1}^{k} e(i))$$

- Steueranteil aus der Führungsgröße $y_r$ (Block 28; $k_2 \cdot y_r$)
- Steueranteil aus dem Vorderachslenkwinkel $\delta_v$ (Block 29; $k_{11} \cdot \delta_y$)

Um eine bezüglich der Fahrzeuggeschwindigkeit robuste Regelung zu erhalten, werden die Regelparameter mit dem numerischen Optimierungsverfahren "Reglerentwurf mit vektoriellem Gütekriterium" nach Kreisselmeier bestimmt. Dieses Verfahren ist in der Zeitschrift Regelungstechnik 27 Heft 3, 1979 Seiten 76-79 beschrieben. Zur Optimierung sind die im folgenden angegebenen Schritte notwendig:

(1) Formulierung des Regelproblems als Multimodell-Mehrkriterienproblem.

Für die Entwurfsanforderungen

- kleine Abweichung der Giergeschwindigkeit vom Sollverlauf
- kleine Abweichung der Querbeschleunigung vom Sollverlauf
- Geringer Stellaufwand

werden die Gütekriterien

$$J_1 = \sum_{k=1}^{N} [y_r(k) - v_x \dot{\Psi}(k)]^2$$

$$J_2 = \sum_{k=1}^{N} [y_r(k) - a_y(k)]^2$$

$$J_3 = \sum_{k=1}^{N} [\delta_h(k) - \delta_h(k-1)]^2$$

verwendet.

Diese Gütekriterien werden für mehrere Arbeitspunkte in einem Gütevektor G zusammengefaßt. Bei z. B. zwei Geschwindigkeiten $v_{x1}$ und $V_{x2}$ erhält man

$$\underline{G} = \begin{bmatrix} J_1(v_{x1}) \\ J_2(v_{x1}) \\ J_3(v_{x1}) \\ \\ J_1(v_{x2}) \\ J_2(v_{x2}) \\ J_3(v_{x2}) \end{bmatrix}$$

(2) Wahl eines Vorgabevektors

Das Ziel der Optimierung besteht darin, einen Satz von Reglerparametern

$$\underline{r} = \begin{bmatrix} k_{11} \\ k_{12} \\ k_{13} \\ k_2 \\ k_3 \\ k_4 \end{bmatrix}$$

zu finden, für den alle Komponenten des Gütevektors $\underline{G}$ einen möglichst kleinen Wert annehmen und der somit in dem gesamten durch die Arbeitspunkte vorgegebenen Betriebsbereich ein günstiges Regelverhalten liefert. Dazu wird ein Vorgabevektor $\underline{c}$ gewählt und $\underline{r}$ so bestimmt, daß die Bedingung

$G(r) \leqq \underline{c}\ G_i(\underline{r}) \leqq c_i,\ i = 1 \ldots 6)$

erfüllt ist, d.h. eine Verbesserung aller Gütewerte gegenüber den Vorgabewerten erreicht wurde. Als Vorgabevektor kann der Gütevektor einer in einem Arbeitspunkt abgestimmten Regelung verwendet werden.

(3) Minimierung der Zielfunktion

Aus Gütevektor und Vorgabevektor wird die skalare Zielfunktion

$g(\underline{r}) = \max(G_i(\underline{r})/c_i)\ i = 1 \ldots 6$

gebildet. Durch Minimierung dieser Zielfunktion erhält man die Reglerparameter $\underline{r}$, die das bestmögliche Verhältnis Gütevektor zu Vorgabevektor ergeben. Die Optimierungsaufgabe lautet also

$\min\ [\max(G_i(\underline{r})/c_i)]\ \underline{r}\ i = 1 \ldots 6$

Um Probleme bei der numerischen Lösung dieser Optimierungsaufgabe zu vermeiden, ersetzt man g(r) durch die Näherung

$$g'(\underline{r}) = 1/p \ln \left[\sum_{i=1}^{6} e^{(p\, G_i(\underline{r})/c_i)}\right]$$

Für große p geht der Näherungsfehler gegen Null.

Fig. 3 zeigt den prinzipiellen Ablauf der Optimierung. Aus einem vorgegebenen Suchbereich wird ein Reglerparametersatz $\underline{r}$ zufällig ausgewählt (Block 30). Damit werden die Simulationen des geschlossenen Regelkreises in den verschiedenen Arbeitspunkten durchgeführt. Als Arbeitspunkt werden mehrere Geschwindigkeiten im betrachteten Betriebsbereich gewählt. Für jede Geschwindigkeit wird ein geeignetes Fahrmanöver (z.B. Lankradwinkelsprung) vorgegeben. Zur Simulation kann z. B. ein lineares Einspurmodell in jedem Arbeitspunkt verwendet werden. Auch der Einsatz genauer nichtlinearer Fahrzeugmodelle ist möglich.

Nach einer gewissen Anzahl solcher Versuche wird aus den besten gespeicherten Zielfunktionswerten ein kleinerer Suchbereich berechnet und der nächste Iterationsschritt beginnt. Bei Erreichen eines Abbruchkriteriums, d.h. wenn die Änderung des Zielfunktionswertes von einem Iterationsschritt zum nächsten eine vorgegebene Schranke unterschreitet, wird die Iteration beendet und die optimalen Reglerparameter liegen vor.

Es hat sich gezeigt, daß diese Modellfolgeregelung sowohl ein günstiges Übergangsverhalten als auch ein schnelles Ausregeln von äußeren Störeinflüssen ermöglicht. Bereits bei zwei Arbeitspunkten des Multimodellproblems gelingt es, eine Regelung mit festen Parametern zu finden, die im gesamten Geschwindigkeitsbereich einsetzbar ist. Das Entwurfsverfahren bietet die Möglichkeit, auch andere Reglerstrukturen zur Hinterachslenkung zu verwenden. Außerdem ist problemlos eine Erweiterung auf Vorderachslenkung oder eine Kombination aus Vorderachs- und Hinterachslenkung möglich, da das Optimierungsverfahren eine Erweiterung der Reglerstruktur und damit der zu optimierenden Reglerparameter erlaubt.

Nomenklatur

| | |
|---|---|
| $a_y$ | Querbeschleunigung |
| c | Vorgabevektor |
| $\bar{D}$ | Gewichtungsvaktor der Regelgröße |
| e | Regelabweichung |
| $\underline{G}$ | Gütevektor |
| $\bar{J}$ | Gütekriterium |
| k | Zeitschritt |
| K | Reglerparameter |
| N | Anzahl der Simulationszeitschritte |
| r | Vektor der Reglerparameter |
| $\bar{T}$ | Abtastzeit |
| $v_x$ | Längsgeschwindigkeit |
| $v_y$ | Quergeschwindigkeit |
| $\underline{X}$ | Zustandsvektor |
| $\bar{y}$ | Regelgröße |
| $y_r$ | Führungsgröße |
| $\delta_v$ | Lenkwinkel vorn |
| $\delta_h$ | Lenkwinkel hinten |
| $\Psi$ | Giergeschwindigkeit |
| p | Näherungsparameter |

## Patentansprüche

1. Vorrichtung zur Steuerung des Lenkwinkels an wenigstens einer Achse enthalten
   1) erste Mittel zur Bestimmung des Lenkradeinschlags ($\delta_v$), der Fahrzeuggeschwindigkeit ($v_x$), der Giergeschwindigkeit $\Psi$, der Querbeschleunigung $a_y$ und der Quergeschwindigkeit $v_y$ des Fahrzeugs,
   2) zweite Mittel zur Bestimmung einer Bezugsvariablen $y_r$ mit Hilfe des Vorderachs-Lenkwinkels,
   3) dritte Mittel zur Bestimmung einer Systemvariablen y mit Hilfe der linearen Verknüpfung der Querbeschleunigung $a_y$ und der Größe $v_X \cdot \Psi$,
   4) vierte Mittel zur Bildung der Differenz der Bezugsvariablen $y_r$ und der Systemvariablen y
   5) fünfte Mittel zur Bildung eines Lenkwinkelsignals ($\delta_h$ und/oder $\Delta\delta_v$) unter Verwendung der Summanden $k_{11} \cdot v_y$, $b \cdot \Psi$, $k_2\ y_r$, $k_{3S}$edt und $k_4\ \delta_v$
   6) Verstellmittel zur Einstellung des ermittelten Lenkwinkels ($\Delta\delta_v$ und/oder $\delta_h$, dadurch gekennzeichnet, daß b einen geschwindigkeitsabhängigen Anteil ($k_{13} \cdot v_x$) enthält und daß die Größe der Regelparameter $k_{11}$, $k_{13}$, $k_2$, $k_3$ und $k_4$ mit Hilfe des bekannten nummerischen Optimierungsverfahrens "Reglerentwurf mit vektoriellem Gütekriterium" festgelegt wird.

2. Vorrichtung nach Anspruch 1, dadurch gekennzeichnet, daß b außerdem noch einen konstanten Anteil $k_{12}$ aufweist, der ebenfalls durch das Optimierungsverfahren festgelegt wird.

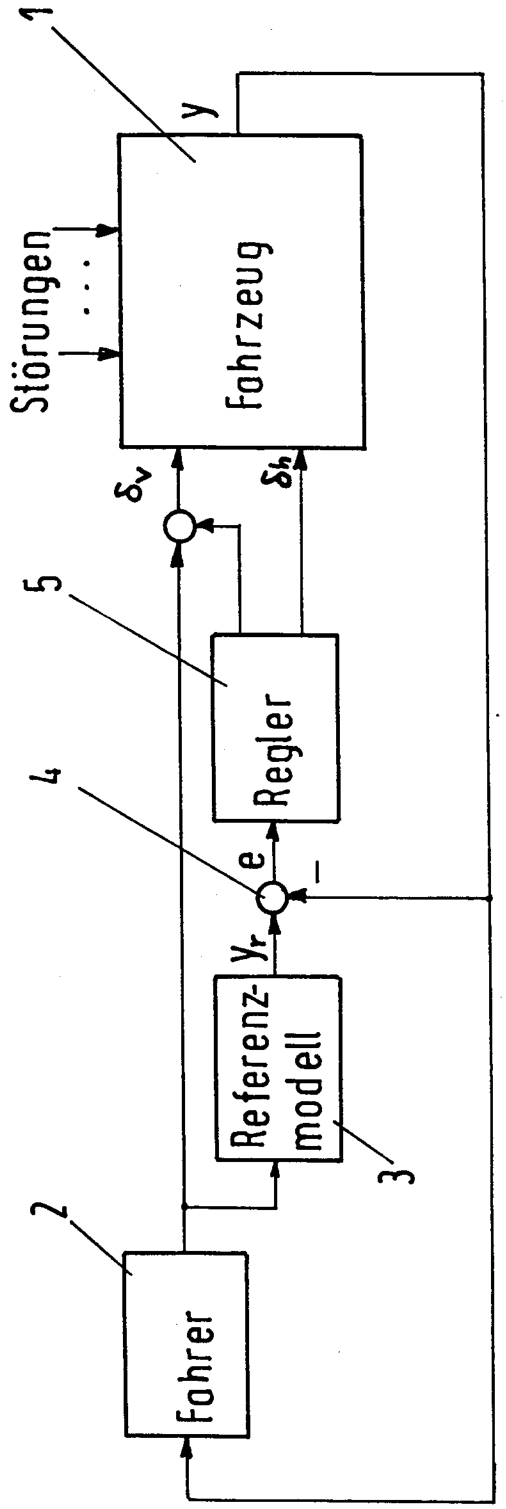
1
Störungen
Fahrzeug
y
5
Regler
4
e
$y_r$
Referenz-
modell
3
2
Fahrer
$\delta_v$
$\delta_h$
–

Fig.1

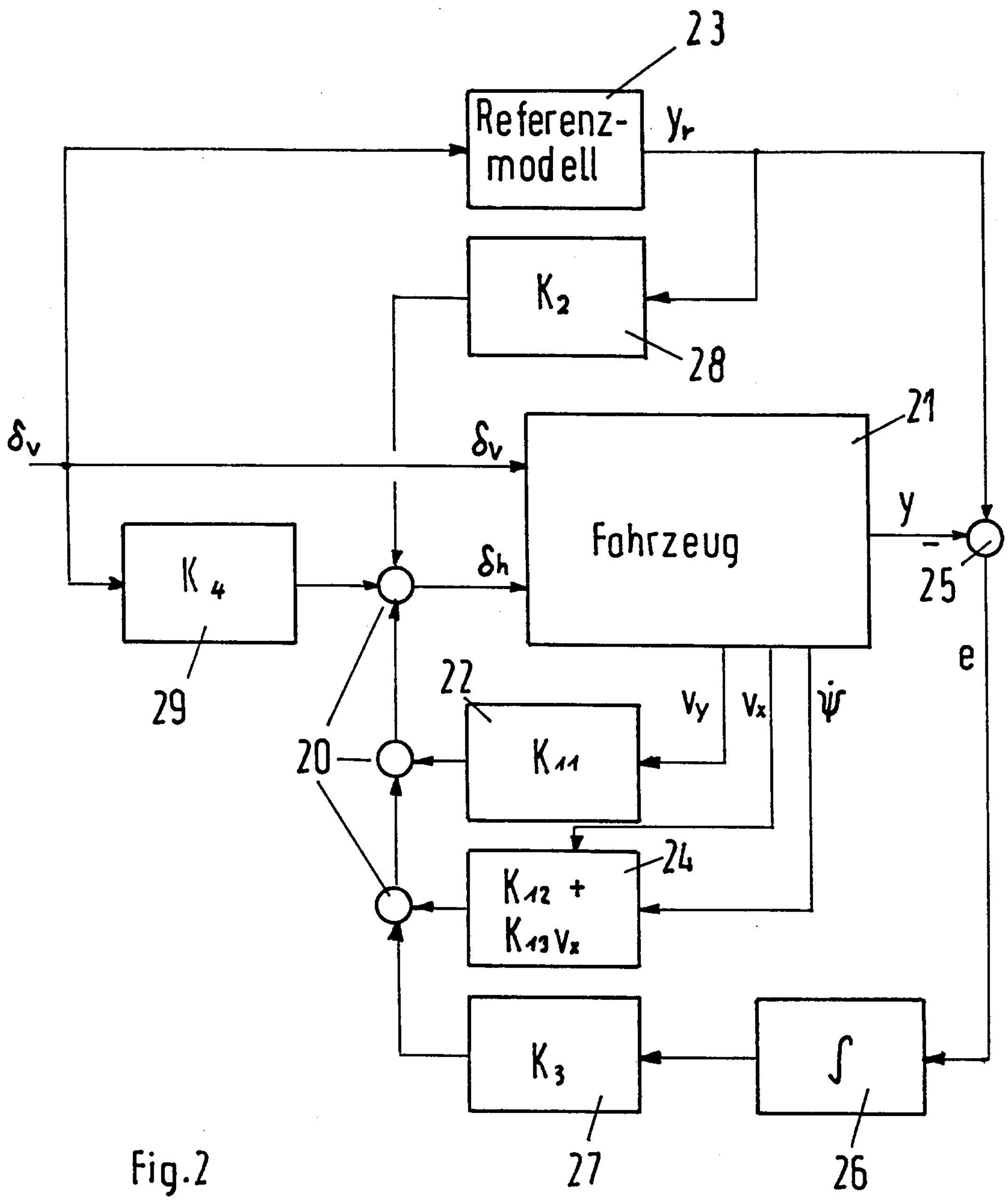
23
Referenz-modell
$y_r$
$K_2$
28
21
$\delta_v$
$\delta_v$
Fahrzeug
y
25
$K_4$
$\delta_h$
29
e
22
$v_y$
$v_x$
$\dot{\psi}$
20
$K_{11}$
24
$K_{12}$ + $K_{13} v_x$
$K_3$
∫
27
26

Fig.2

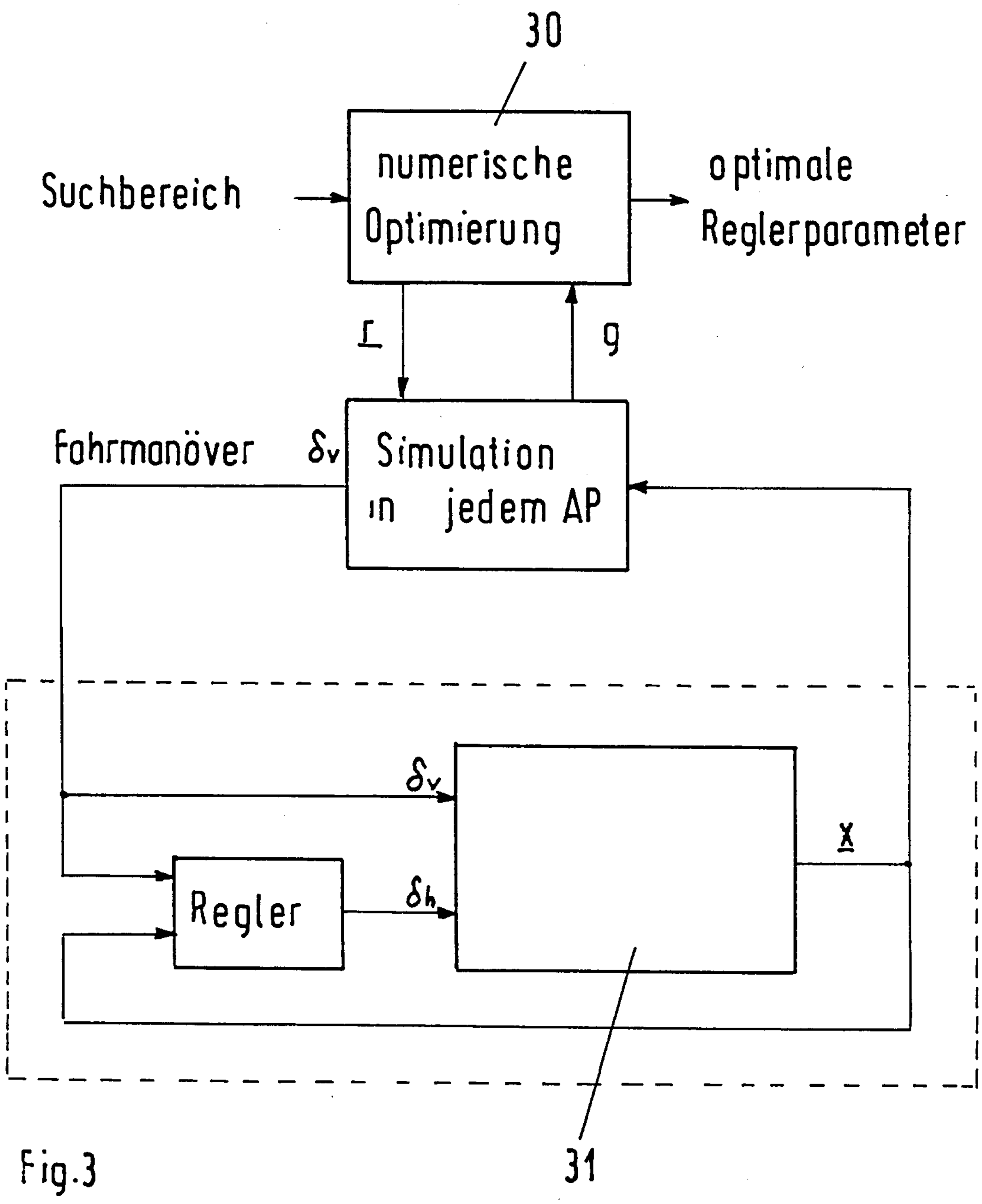
30
Suchbereich
numerische
Optimierung
optimale
Reglerparameter
r
g
Fahrmanöver
δv
Simulation
in jedem AP
δv
x
Regler
δh
31

Fig.3

Europäisches Patentamt

# EUROPÄISCHER RECHERCHENBERICHT

Nummer der Anmeldung

EP 93 10 0244

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | DE-A-3 734 477 (NISSAN)<br>* das ganze Dokument * | 1 | B62D7/15<br>B62D6/00<br>//B62D101:00<br>//B62D111:00 |
| D,A | REGELUNGSTECHNIK<br>Nr. 3, 1979, MÜNCHEN,DE<br>Seiten 76 - 79<br>KREISSELMEIER ET AL. 'Systematische Auslegung von Reglern durch Optimierung eines vektoriellen Gütekriteriums'<br>* das ganze Dokument * | 1 | |
| A | EP-A-0 379 143 (MAZDA)<br>* das ganze Dokument * | 1 | |
| A | EP-A-0 275 744 (PEUGEOT ET AL.)<br>* Zusammenfassung * | 1 | |
| A | DE-A-3 642 049 (NISSAN)<br>* das ganze Dokument * | 1 | |
| A | EP-A-0 333 108 (HONDA)<br>* das ganze Dokument * | 1 | RECHERCHIERTE SACHGEBIETE (Int. Cl.5 ) |
| A | PROCEEDINGS OF THE 1990 AMERICAN CONTROL CONFERENCE 23. Mai 1990, SAN DIEGO,US<br>Seiten 801 - 808<br>ITO ET AL. 'Stability Analysis of Automatic Lateral Motion Controlled Vehicle with Four Wheel Steering system'<br>* Absatz 2; Abbildung 2 * | 1 | B62D<br>F16F |

Der vorliegende Recherchenbericht wurde für alle Patentansprüche erstellt

| Recherchenort | Abschlußdatum der Recherche | Prüfer |
|---|---|---|
| BERLIN | 10 MAI 1993 | KRIEGER Ph. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)